# EUROPEAN PATENT SPECIFICATION

(11) **EP 2 724 621 B1**
(45) Date of publication and mention of the grant of the patent: **06.12.2017**
(21) Application number: 13189542.7
(22) Date of filing: 21.10.2013
(51) Int. Cl.: A23G 1/48, A23F 5/14, A23F 5/08, A23D 9/007

(54) **Methods for the manufacture of coffee liquor and coffee bars**
Verfahren zur Herstellung von Kaffeelikör sowie Kaffeeriegel
Procédés pour la fabrication de liqueur de café et des barres de café

(30) Priority: 23.10.2012 BR 102012027167
(43) Date of publication of application: 30.04.2014
(73) Proprietor: da Cruz Abaurre, Flávio, 29.055-215 Vitória - ES (BR)
(72) Inventor: da Cruz Abaurre, Flávio, 29.055-215 Vitória - ES (BR)
(74) Representative: Tansini, Elio Fabrizio

(56) References cited:
- WO-A1-2005/077197
- WO-A1-2009/009837
- WO-A2-2007/103688
- BE-A6- 1 003 494
- DE-A1-102009 025 400
- DE-U1- 20 017 502
- GB-A- 2 006 603
- US-A1- 2006 222 753

## Description

The present invention refers to a manufacturing method for the production of a new food ingredient, from now on called "coffee liquor" (which may also be called "coffee mass"). This ingredient is able to preserve the sensory and aromatic properties of the R&G (Roasted & Ground) coffee for extensive period of time. Moreover, this invention also refers to the utilization of the said coffee liquor as an ingredient for the use of the R&G coffee in the formulation of edible, composite coffee bars in solid form.

The herein proposed method has the objective of preserving the organoleptical properties of the R&G coffee, through the preparation of coffee liquor and its utilization in the manufacturing of edible solid coffee bars. The coffee liquor is prepared through the encapsulation of finely milled R&G coffee with vegetable fat and/or cocoa butter, with the objective to confer the physical insulation of the coffee's micro-particles from the atmospheric air, thus preventing that oxidative action happens to its aromatic and sensory components through means of their exposure and chemical reaction with the oxygen present in the atmospheric air.

The method Of this present invention was developed to render food-based coffee bars in solid form from coffee liquor, which then allows the food consumption of solid form R&G coffee beans in its entirely, either pure or composite, i.e., in combination with other food ingredients which are indicated as part of the formulation, such as: milk derivatives, cocoa powder, starches, maltodextrins, malt extracts, sugars, natural or artificial sweeteners, vitamins, mineral salts, etc...

### BACKGROUND OF THE INVENTION

The manufacturing of concentrated coffee extracts includes roasting, milling, extraction and concentration.

The green coffee, after its roasting and milling steps presents a very short shelf-life, consequence of the progressive oxidation of its aromatic and sensory components, whenever they enter in contact with atmospheric air during the processing steps already described.

As a consequence of the above-referred inconvenience, several processes are utilized with the purpose of prevent and/or minimize the losses and/or change in desirable aromas during each of the processing steps.

To overcome this effect, the R&G coffee is protected with special packages containing inert gas or under vacuum.

However, once the above-referred coffee packages are opened, the R&G coffee enters in contact with the atmospheric air, and as a consequence, it gradually loses some of the important organoleptical properties such as aroma (i.e., becoming oxidized) and taste (i.e., becoming stale) .

Therefore, it is a technical need to develop a suitable method for manufacturing the food ingredient coffee liquor, capable of preserving the organoleptic properties of the R&G coffee for an extensive period of time, even in contact with atmospheric air, -- as well as to utilize such an ingredient for the production of edible coffee bars in solid form.

WO 2007/103688 describes a process in which roasted coffee is ground to a particle size of ca. 400 microns and then blended with sucrose, skim milk powder, milk fat, cocoa butter and lecithin, and then the resulting mixture is milled and heated before cooling and adding to moulds.

### OBJECTIVE OF THE INVENTION

The objective of this present invention is to offer a suitable method for the manufacture of coffee liquor, capable of preserving the organoleptic properties of the component roast and ground coffee for extensive period of time, even though the ingredient might be in direct contact with the atmospheric air.

Another objective of this present invention is to offer a suitable method for manufacturing solid coffee bars from coffee liquor, which also preserves the organoleptic properties of the roast and ground coffee for extensive period of time, even though the product might be in direct contact with the atmospheric air. Disclosed herein is the utilization of the above-described ingredient or product in the manufacturing of other solids products in an edible form of coffee bars, in combination with other ingredients as part of their various formulations.

### DESCRIPTION OF THE ANNEXED FIGURES

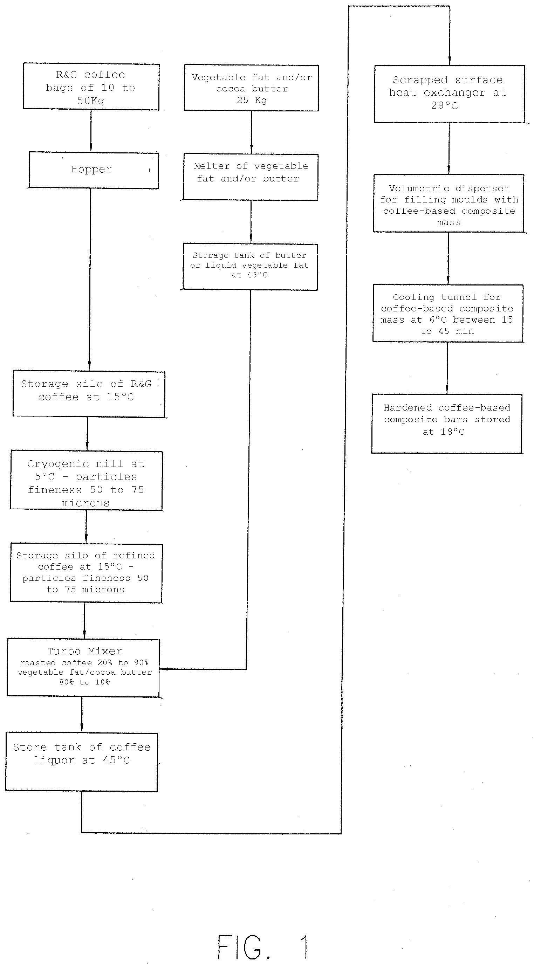

**Figure 1** illustrates in form of a block flow diagram, the method for the manufacture of coffee liquor, object of this invention;

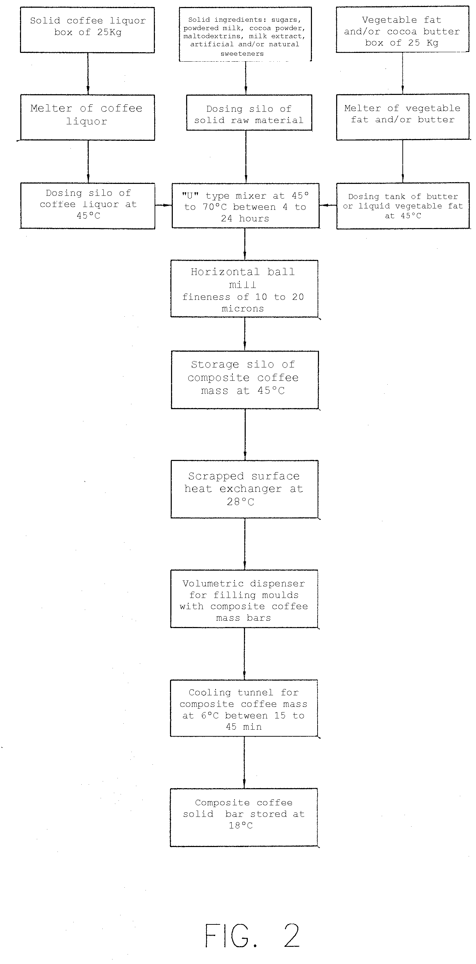

**Figure 2** illustrates in form of a block flow diagram, the method for the manufacture of solid form coffee bars, made from coffee liquor, and object of this invention.

### DETAILED DESCRIPTION OF THE INVENTION

In accordance with the Figures (1 and 2)annexed, the method for manufacturing coffee liquor, the method for preparation of coffee bar in solid form from coffee liquor, as well as the method for manufacturing solid, edible and composite coffee bars, they all utilize an ingredient called coffee liquor, prepared by mixing 75% to 10% finely milled roast and ground coffee, to 25% to 90% of vegetable fat and/or cocoa butter.

The industrial method to produce coffee liquor encompasses the following steps:
a) In a hopper, discharge the R&G coffee from bags of 10 to 50 kg of the product, and transfer it through conveyors to the storage silo (Silo #1), sealed with argon, nitrogen or carbon dioxide inert gas, equipped with a cooling system capable of maintaining the content at 10 to 25°C, but preferably at 15°C;
b) In another hopper, discharge the 25 Kg cases of vegetable fat and/or cocoa butter in a solid fat melter, and transfer the content to the storage tank (Tank #1) of melted vegetable fat and/or cocoa butter;
c) Refine the coffee from Silo # 1 through a high-impact cryogenic mill with closed loop and under inert gas atmosphere, preferably CO₂ or N₂ atmosphere, under a temperature range of 0 to 15°C, preferably at 5°C; said mill being equipped with a dynamic system for mechanical classification of particle sizes, allowing the physical control of the particle size under a range between 50 to 75 microns, and thereafter transferring the refined coffee to a storage silo (Silo #2), under a temperature range of 10 to 25°C, preferably at 15°C;
d) Mix the refined coffee from step c), first in a turbo mixer, in a continuous way, with the melted cocoa butter and/or melted vegetable fat, until obtaining a homogenized coffee liquor, and transfer the same to a cooled store tank (Tank # 2), temperature range from 35 to 55°C, preferably 45°C ; the proportion of refined coffee to vegetable fat and/or cocoa butter being from 25% to 90% for the vegetable fat and/or cocoa butter, and from 80% to 10% for the refined coffee, respectively, -- the refined coffee particles having a particle size range from 50 to 75 microns;
e) Transfer the coffee liquor to a scraped-surface heat-exchanger, reducing the temperature in a range of 18 to 38°C, preferably 28°C, and then to a volumetric dosing unit, which fills plastic moulds with the coffee liquor;
f) Transfer the coffee liquor-filled plastic moulds to a cooling tunnel for a period of from 15 to 45 min., at an internal temperature from 2 to 10°C, preferably 6°C, thus ensuring the hardening of coffee liquor;
g) Package the coffee liquor bars obtained in step f) first in plastic bags made of PVC, and placed inside kraft-type corrugated cases and store the product under a temperature ranged 8 to 28°C, preferably at 18°C, under dry conditions.
With the above-describe method it is possible to obtain solid bars made of coffee liquor, capable of maintaining the roast and ground coffee's organoleptical properties stable for a large period of time, ensuring a shelf live of up to one year for the product.

From the coffee liquor solid bars it is then possible to prepare a interlinked family line of composite coffee-based products formulated with other ingredients, with application to various market segments such as the industrial, foodservice and domestic ones.

Thus, the method to process coffee-based composite solid bars comprises the following steps:
a) Melting 25 Kg of coffe liquor bars in a melter #1 and then transferring the melted coffee liquor to a dosing tank # 2, maintained at a temperature range of 35 to 55°C, preferably at 45°C;
b) Loading a plurality of solid ingredients preferably chosen from the group consisting of sugars, powdered milk and its derivatives, cocoa powder, maltodextrins, malt extract and artificial and/or natural sweeteners, through a dumper, into a dosing silo #3;
c) Melting 25 kg of vegetable fats and/or cocoa butter in a melter #2, and then transferring the melted vegetable fats and/or cocoa butter to a dosing tank #3, keeping them at a temperature range of 35 to 55°C, preferably 45°C;
d) Dosing the melted coffee liquor, the solid ingredients and the melted vegetable fats and/ or cocoa butter into the processing chamber of a "U" type mixer with a batch processing capacity of 0.8 to 11 tons, under a temperature range from 45 to 70°C, for a processing time between 4 and 24 hr.
e) Transferring the composite mass from step d) to the milling chamber of a horizontal ball mill and milling the composite mass until a particle size of from 10 to 50 microns is reached;
f) Transferring the milled composite mass from step e) to a storage tank 4, keeping it at a temperature range of 35 to 55°C, preferably 45°C;
g) Transferring the milled composite mass obtained in step f) to a scraped surface heat exchanger, reducing the temperature to a range of 18 to 38°C, preferably 28°C, and from there to a volumetric dispenser for filling plastic moulds with the composite mass;
h) Transferring the coffee product-filled plastic moulds to a cooling tunnel where the product will remain between 15 and 45 min, under a temperature range of 2 to 10°C, preferably 6°C, while the hardening of the coffee-based composite mass will occur;
i) Packaging the hardened coffee-based composite bars in BOPP plastic film, with hot sealing, followed by packaging in kraft-type corrugated cartons and storage in a cooled warehouse with a temperature range from 8 to 28°C, preferably 18°C, under dry conditions.

With the above-described method it is possible to obtain edible coffee-based solid bars which do not require any special preservation system for the preservation of the organoleptical properties of the product, such as the need for a sealed packaged under inert gas atmosphere, as it is the case of packaged roast and ground coffee .

The above-referred coffee-based composite bars, if maintained under storage conditions at temperature range of 18 to 20°C, and dried conditions, will exhibit a shelf-life of up to one year, depending on the ingredients composition utilized in the formulation.

### EXAMPLES OF COMPOSITE COFFEE-BASED SOLID BAR FORMULAS

The present invention will now be described as related to several examples of application of the use of coffee liquor as ingredient in edible formulations for preparation of coffee-based composite solid bars, in accordance with the above-described methods, whose examples that should not be interpreted as limitants of the scope of this invention.

### Example #1- Type "Espresso" solid coffee bar.

The espresso-type coffee solid bars can be formulated containing 50% to 26% coffee liquor, 26% to 24% cocoa butter and/or vegetable fat, and 24% to 50% of refined sugar, with the composite product having its fineness adjusted to the range of 16 to 50 microns.

### Example #2 - Type "Italian" solid coffee bar.

The Italian-type solid coffee bars can be formulated as containing from 30% to 8% coffee liquor, from 26% to 36% cocoa butter and/or vegetable fat, from 14% to 6% milk powder solids, and from 30% to 50% refined sugar, with the composite product having its fineness adjusted to the range of 16 to 50 microns.

### Example #3 - Type "brewed & filtered coffee" solid coffee bar.

The "brewed & filtered coffee" type solid coffee bars can be formulated as containing from 24% to 10% coffee liquor, from 26% to 36% cocoa butter and/or vegetable fat, from 20% to 4% maltodextrin, and from 30% to 50% refined sugar, with the composite product having its fineness adjusted to the range of 16 to 50 microns.

### Example #4 - Type "coffee with milk" solid coffee bar.

The "coffee with milk" solid coffee bars can be formulated as containing from 20% to 6% coffee liquor, from 26% to 32% cocoa butter and/or vegetable fat, from 14% to 2% maltodextrin, from 10% to 20% milk powder (whole or skim- types), and from 30% to 40% refined sugar, with the composite product having its fineness adjusted to the range of 16 to 50 microns.

### Example #5 - Type "Cappuccino" solid coffee bar.

The "Cappuccino" type solid coffee bars can be formulated as containing from 26% to 6% coffee liquor, from 26% to 30% cocoa butter and/or vegetable fat, from 3% to 8% cocoa powder (with 10 to 12% cocoa butter content), from 20% to 26% milk powder (whole or skim- types), and from 30% to 40% refined sugar, with the composite product having its fineness adjusted to the range of 16 to 50 microns.

### Example #6 - Type "Moccha" solid coffee bar.

The "Moccha" type solid coffee bars can be formulated as containing from 10% to 4% coffee liquor, from 26% to 30% cocoa butter and/or vegetable fat, from 17% to 20% milk powder (whole or skim- types); from 6% to 16% cocoa powder, natural or alkalinized (with 10 to 12% cocoa butter content), and from 35% to 30% refined sugar, with the composite product having its fineness adjusted to the range of 16 to 50 microns.

### Example #7 - Type "French Vanilla" solid coffee bar.

The "French Vanilla" type solid coffee bars can be formulated as containing from 8% to 2% coffee liquor, from 14% to 2% malt extract, from 11% to 2% Lactose, from 26% to 30% cocoa butter and/or vegetable fat, from 1% to 0.1% natural and/or artificial "French Vanilla" flavoring, from 10% to 27.9% milk powder (whole or skim- types), and from 30% to 36% refined sugar, with the composite product having its fineness adjusted to the range of 16 to 50 microns.

### Example #8 - "Amarula" type solid coffee bar.

The "Amarula" type solid coffee bars can be formulated as containing from 8% to 2% coffee liquor, from 14% to 2% malt extract, from 11% to 2% Lactose, from 26% to 30% cocoa butter and/or vegetable fat, from 1% to 0.1% natural and/or artificial "Amarula" flavoring, from 10% to 27.9% milk powder (whole or skim- types), and from 30% to 36% refined sugar, with the composite product having its fineness adjusted to the range of 16 to 50 microns.

It can be easily understood by the professionals familiar with edible formulation techniques that changes in the formulas can be done to the formulas presented as examples, without being considered as outside the scope of this invention. Consequently, the descriptions and examples presented in detail through this patent application are to be considered merely as illustratives of this patent, and therefore not to be considered as specific limitations in the scope of this patent. Thus, it is herein understood that the patent reinvidication extends its application to any reinvidications to any similarities and equivalences of the core invention herein presented.

## Claims

1. Method to produce coffee liquor consisting of roast and ground coffee and vegetable fat and/or cocoa butter, obtained through the following process steps:
a) In a hopper (#1), load 10 to 50 kg of roasted and ground coffee, and transfer the roasted and ground coffee, through conveyors, to a storage silo (Silo #1), sealed with Argon, Nitrogen or Carbon Dioxide inert gas, equipped with a cooling system capable of maintaining the content at 10 to 25ºC, preferably at 15ºC;
b) From another hopper (#2), load 25 Kg of vegetable fat and/or cocoa butter in a solid fat melter (#1), and transfer the melted vegetable fat and/or cocoa butter to a storage tank (Tank #1) ;
c) Refine the coffee from Silo # 1 through a high-impact cryogenic mill (#1) with closed loop and under inert gas atmosphere, preferably CO₂ or N₂ atmosphere, under a temperature range of 0 to 15ºC, preferably at 5ºC, said mill being equipped with a dynamic system for mechanical classification of particle sizes, allowing the physical control of the particle size within a range between 50 to 75 microns, and thereafter transferring the refined coffee to a storage silo (Silo #2), under a temperature range of 10 to 25ºC, preferably at 15ºC;
d) Mix the refined coffee from step c), first in a turbo mixer, in a continuous way, with the melted cocoa butter and/or vegetable fat, until obtaining an homogenized coffee liquor, and transfer the same to a cooled store tank (Tank # 2) at a temperature range from 35 to 55ºC, preferably 45ºC, the proportion of refined coffee to vegetable fat and/or cocoa butter being from 20% to 90% for the vegetable fat and/or cocoa butter, and from 80% to 10% for the refined coffee, respectively, the refined coffee particles having a particle size within the range from 50 to 75 microns;
e) Transfer the coffee liquor obtained in step d) to a scraped-surface heat-exchanger, reducing the temperature in a range of from 18 to 38ºC, preferably 28ºC, and then to a volumetric dosing unit which fills plastic moulds with the coffee liquor;
f) Transfer the coffee liquor-filled plastic moulds to a cooling tunnel for a period of from 15 to 45 min., at an internal temperature from 2 to 10ºC, preferably 6ºC, thus ensuring the hardening of the coffee liquor;
g) Packaging the coffee liquor bars obtained in step f) first in plastic bags made of PVC that are then placed inside kraft-type corrugated cases and store the cases under a temperature ranged 8 to 28ºC, preferably at 18ºC, under dry conditions.

2. Method for manufacturing coffee-based composite solid bars made from coffee liquor, obtained with the method according to claim 1, comprising the steps of:
a) Melting 25 Kg of coffee liquor bars in a melter (#1) and then transferring the melted coffee liquor to a dosing tank (# 2), maintained at a temperature range of 35 to 55ºC, preferably at 45ºC;
b) Loading a plurality of solid ingredients preferably chosen from the group consisting of sugars, powdered milk and its derivatives, cocoa powder, maltodextrins, malt extract and artificial and/or natural sweeteners, through a dumper, into a dosing silo (#3) ;
c) Melting 25 kg of vegetable fats and/or cocoa butter in a melter (#2), and then transferring the melted vegetable fats and/or cocoa butter to a dosing tank (#3), keeping them at a temperature range of 35 to 55ºC, preferably 45ºC;
d) Dosing the melted coffee liquor, the solid ingredients and the melted vegetable fats and/or cocoa butter into the processing chamber of a "U" type mixer with a batch processing capacity of 0.8 to 11 tons, under a temperature range from 45 to 70ºC, for a processing time between 4 and 24 hr;
e) Transferring the composite mass obtained from step d) to the milling chamber of a horizontal ball mill and milling the composite mass until a particle size range of 10 to 50 microns is reached;
f) Transferring the milled composite mass of step e) to a storage tank (#4), keeping it at a temperature range of 35 to 55ºC, preferably 45ºC;
g) Transferring the milled composite mass obtained in step f) to a scraped-surface heat exchanger, reducing the temperature to a range of 18 to 38ºC, preferably 28ºC, and from there to a volumetric dispenser for filling plastic moulds with the composite mass;
h) Transferring the filled plastic moulds to a cooling tunnel where the product will remain between 15 and 45 min, at a temperature range of 2 to 10ºC, preferably 6ºC, while the hardening of the coffee-based composite mass occurs;
i) Packaging the hardened coffee-based composite bars obtained in step h) in BOPP plastic film, with hot sealing, followed by packaging in kraft-type corrugated cartons and storage in a cooled warehouse with a temperature range from 8 to 28ºC, preferably 18ºC, under dry conditions.

## Patentansprüche

1. Verfahren zur Herstellung von Kaffeeliquor, bestehend aus geröstetem und gemahlenem Kaffee sowie Pflanzenfett und/oder Kakaobutter, erhalten durch die folgenden Prozessschritte:
a) Laden von 10 bis 50 kg von geröstetem und gemahlenem Kaffee in einen Trichter (Nr. 1) und Transferieren des gerösteten und gemahlenen Kaffees über Förderer in ein Lagerungssilo (Silo Nr. 1), abgedichtet mit Argon-, Stickstoff- oder Kohlendioxidinertgas, ausgestattet mit einem Kühlsystem, das in der Lage ist, den Inhalt auf einer Temperatur von 10 bis 25 °C, vorzugsweise 15 °C, zu halten;
b) Laden von 25 kg Pflanzenfett und/oder Kakaobutter von einem anderen Trichter (Nr. 2) in eine Schmelzeinrichtung für festes Fett (Nr. 1) und Transferieren des geschmolzenen Pflanzenfetts und/oder der geschmolzenen Kakaobutter in einen Lagerungsbehälter (Behälter Nr. 1);
c) Aufbereiten des Kaffees aus Silo Nr. 1 durch eine hoch wirksame Kryomühle (Nr. 1) mit Regelkreis und unter Inertgasatmosphäre, vorzugsweise CO₂- or N₂-Atmosphäre, in einem Temperaturbereich von 0 bis 15 °C, vorzugsweise bei 5 °C, wobei diese Mühle mit einem dynamischen System für die mechanische Einstufung der Teilchengrößen ausgestattet ist, was die physikalische Kontrolle der Teilchengröße in einem Bereich von 50 bis 75 µm ermöglicht, und anschließendes Transferieren des aufbereiteten Kaffees in ein Lagerungssilo (Silo Nr. 2) bei einer Temperatur von 10 bis 25 °C, vorzugsweise 15 °C;
d) Mischen des aufbereiteten Kaffees aus Schritt c) zuerst kontinuierlich in einem Turbomixer mit der geschmolzenen Kakaobutter und/oder dem geschmolzenen Pflanzenfett, bis ein homogenes Kaffeeliquor erhalten wird, und deren Transferieren in einen gekühlten Lagerungsbehälter (Behälter Nr. 2) in einem Temperaturbereich von 35 bis 55 °C, vorzugsweise bei 45 °C, wobei der aufbereitete Kaffee und das Pflanzenfett und/oder die Kakaobutter einen Anteil von jeweils 20 bis 90 % an Pflanzenfett und/oder Kakaobutter bzw. 80 bis 10 % an aufbereitetem Kaffee aufweisen und die aufbereiteten Kaffeeteilchen eine Teilchengröße von 50 bis 75 µm besitzen;
e) Transferieren des Kaffeeliquors aus Schritt d) zu einem Schabewärmetauscher, wobei die Temperatur auf einen Bereich von 18 bis 38 °C, vorzugsweise auf 28 °C, reduziert wird, und dann zu einer Volumendosiereinrichtung, die Kunststoffformen mit dem Kaffeeliquor füllt;
f) Transferieren der mit dem Kaffeeliquor gefüllten Kunststoffformen zu einem Kühltunnel für einen Zeitraum von 15 bis 45 Minuten und bei einer Innentemperatur von 2 bis 10 °C, vorzugsweise 6 °C, sodass die Erhärtung des Kaffeeliquors gewährleistet wird;
g) Verpacken der in Schritt f) erhaltenen Kaffeeliquorsriegel zuerst in aus PVC bestehende Kunststoffbeutel, die dann in Schachteln aus Kraftpapier-Wellpappe platziert werden, und Lagern der Schachteln in einem Temperaturbereich von 8 bis 28 °C, vorzugsweise bei 18 °C, unter trockenen Bedingungen.

2. Verfahren zur Herstellung von kaffeebasierten festen Verbundriegeln, bestehend aus Kaffeeliquor, erhalten durch das Verfahren nach Anspruch 1, umfassend die folgenden Schritte:
a) Schmelzen von 25 kg Kaffeeliquorsriegeln in einer Schmelzeinrichtung (Nr. 1) und anschließendes Transferieren des geschmolzenen Kaffeeliquors zu einem Dosierbehälter (Nr. 2), beibehalten in einem Temperaturbereich von 35 bis 55 °C, vorzugsweise bei 45 °C;
b) Laden einer Vielzahl an festen Zutaten, vorzugsweise ausgewählt aus der Gruppe bestehend aus Zucker, Milchpulver und dessen Folgeprodukten, Kakaopulver, Maltodextrinen, Malzextrakt und künstlichen und/oder natürlichen Süßstoffen, mittels eines Schütters in ein Dosiersilo (Nr. 3);
c) Schmelzen von 25 kg Pflanzenfetten und/oder Kakaobutter in einer Schmelzeinrichtung (Nr. 2) und anschließendes Transferieren der geschmolzenen Pflanzenfette und/oder Kakaobutter zu einem Dosierbehälter (Nr. 3) und deren Beibehaltung in einem Temperaturbereich von 35 bis
55 °C, vorzugsweise bei 45 °C;
d) Dosieren des geschmolzenen Kaffeeliquors, der festen Zutaten und der geschmolzenen Pflanzenfette und/oder Kakaobutter in die Prozesskammer eines U-Typ-Mixers mit einer Partiebearbeitungskapazität von 0,8 bis 11 t in einem Temperaturbereich von 45 bis 70 °C während einer Bearbeitungszeit von 4 bis 24 Std.;
e) Transferieren der erhaltenen Verbundmasse aus Schritt d) zur Mahlkammer einer horizontalen Kugelmühle und Mahlen der Verbundmasse, bis ein Teilchengrößenbereich von 10 bis 50 µm erreicht ist;
f) Transferieren der gemahlenen Verbundmasse aus Schritt e) in einen Lagerungsbehälter (Nr. 4) und deren Beibehaltung in einem Temperaturbereich von 35 bis 55 °C, vorzugsweise bei 45 °C;
g) Transferieren der in Schritt f) erhaltenen gemahlenen Verbundmasse zu einem Schabewärmetauscher, wobei die Temperatur auf einen Bereich von 18 bis 38 °C, vorzugsweise auf 28 °C reduziert wird, und von dort zu einem Volumendosierer zum Befüllen von Kunststoffformen mit der Verbundmasse;
h) Transferieren der gefüllten Kunststoffformen zu einem Kühltunnel, in dem das Produkt 15 bis 45 Minuten lang bleibt, in einem Temperaturbereich von 2 bis 10 °C, vorzugsweise bei 6 °C, während sich die kaffeebasierte Verbundmasse erhärtet;
i) Verpacken der in Schritt h) erhaltenen erhärteten kaffeebasierten Verbundriegel in BOPP-Kunststofffolie mit Heißsiegelung, gefolgt vom Verpacken in Kraftpapier-Wellpappekartons, und Lagern in einem gekühlten Lager bei einem Temperaturbereich von 8 bis 28 °C, vorzugsweise bei 18 °C, unter trockenen Bedingungen.

## Revendications

1. Procédé pour la fabrication de liqueur de café, consistant en du café torréfié et moulu et de la matière grasse végétale et/ou du beurre de cacao, obtenue à travers les étapes de procédé suivantes :
a) Dans une trémie (#1), charger 10 à 50 kg de café torréfié et moulu et transférer le café torréfié et moulu, par l'intermédiaire de convoyeurs, vers un silo de stockage (Silo #1), rendu étanche par un gaz inerte tel que l'argon, l'azote ou le dioxyde de carbone, équipé d'un système de refroidissement en mesure de maintenir le contenu entre 10 et 25 °C, de préférence à 15 °C ;
b) À partir d'une autre trémie (#2), charger 25 kg de matière grasse végétale et/ou de beurre de cacao dans un fondoir de graisse solide (#1) et transférer la matière grasse végétale fondue et/ou le beurre de cacao fondu vers un réservoir de stockage (Tank #1) ;
c) Raffiner le café du Silo # 1 par l'intermédiaire d'un broyeur cryogénique à impact élevé (#1) en boucle fermée et sous une atmosphère de gaz inerte, de préférence une atmosphère de CO₂ ou de N₂, à une température comprise entre 0 et 15 °C, de préférence à 5 °C, ledit broyeur étant équipé d'un système dynamique pour la classification mécanique des dimensions des particules, permettant le contrôle physique de la dimension des particules comprise entre 50 et 75 microns, puis transférer le café raffiné vers un silo de stockage (Silo #2) à une température comprise entre 10 et 25 °C, de préférence à 15 °C ;
d) Mélanger le café raffiné de l'étape c), d'abord dans un turbo-mélangeur, de façon continue, avec le beurre de cacao fondu et/ou la matière grasse végétale fondue, jusqu'à obtenir une liqueur de café homogénéisée, et transférer cette dernière vers un réservoir de stockage refroidi (Tank # 2) à une température comprise entre 35 et 55 °C, de préférence 45 °C, la proportion de café raffiné par rapport à la matière grasse végétale et/ou au beurre de cacao allant, respectivement, de 20 à 90 % pour la matière grasse végétale et/ou le beurre de cacao, et de 80 à 10 % pour le café raffiné, les particules de café raffiné ayant une dimension de particule comprise entre 50 et 75 microns ;
e) Transférer la liqueur de café obtenue à l'étape d) vers un échangeur de chaleur à surface raclée, en réduisant la température de 18 à 38 °C, de préférence à 28 °C, et puis vers un doseur volumétrique qui remplit des moules en plastique de liqueur de café ;
f) Transférer les moules en plastique remplis de liqueur de café vers un tunnel de refroidissement pendant une durée comprise entre 15 et 45 minutes, à une température interne comprise entre 2 et 10 °C, de préférence 6 °C, afin de garantir le durcissement de la liqueur de café ;
g) Emballer les barres de liqueur de café obtenues à l'étape f) d'abord dans des sachets en plastique en PVC étant placés à l'intérieur de boîtes ondulées de type kraft et stocker les boîtes à une température comprise entre 8 et 28 °C, de préférence à 18 °C, dans un endroit sec.

2. Procédé de fabrication de barres solides composites à base de café obtenues par le procédé selon la revendication 1, comprenant les étapes de :
a) faire fondre 25 kg de barres de liqueur de café dans un fondoir (#1) puis transférer la liqueur de café fondue vers un réservoir de dosage (# 2) maintenu à une température comprise entre 35 et 55 °C, de préférence à 45 °C ;
b) Charger une pluralité d'ingrédients solides, de préférence choisis dans le groupe composé des éléments suivants : sucres, lait en poudre et ses dérivés, poudre de cacao, maltodextrines, extrait de malt et édulcorants artificiels et/ou naturels, à travers un dumper, dans un silo doseur (#3) ;
c) Faire fondre 25 kg de matières grasses végétales et/ou de beurre de cacao dans un fondoir (#2) puis transférer les matières grasses végétales fondues et/ou le beurre de cacao fondu vers un réservoir de dosage (#3) en les maintenant à une température comprise entre 35 et 55 °C, de préférence 45 °C ;
d) Doser la liqueur de café fondue, les ingrédients solides et les matières grasses végétales fondues et/ou le beurre de cacao fondu dans la chambre de traitement d'un mélangeur en « U » avec une capacité de traitement par lots de 0,8 à 11 tonnes, à une température comprise entre 45 et 70 °C, pendant une durée de traitement comprise entre 4 et 24 heures ;
e) Transférer la masse composite obtenue à l'étape d) à une chambre de broyage d'un broyeur à galets horizontal et broyer la masse composite jusqu'à ce que les particules atteignent une dimension comprise entre 10 et 50 microns ;
f) Transférer la masse composite broyée de l'étape e) à un réservoir de stockage (#4) en la maintenant à une température comprise entre 35 et 55 °C, de préférence 45 °C ;
g) Transférer la masse composite broyée obtenue à l'étape f) vers un échangeur de chaleur à surface raclée, en réduisant la température de 18 à 38 °C, de préférence à 28 °C, et puis vers un distributeur volumétrique pour remplir des moules en plastique de masse composite ;
h) Transférer les moules en plastique remplis vers un tunnel de refroidissement où le produit restera entre 15 et 45 minutes à une température comprise entre 2 et 10 °C, de préférence 6 °C, pour permettre le durcissement de la masse composite à base de café ;
i) Emballer les barres composites durcies à base de café obtenues à l'étape h) dans un film plastique BOPP avec soudure à chaud suivi par un emballage dans des cartons ondulés de type kraft et par un stockage dans un entrepôt réfrigéré à une température comprise entre 8 et 28 °C, de préférence 18 °C, dans un endroit sec.
